# EUROPÄISCHE PATENTSCHRIFT

(11) **EP 1 543 326 B1**
(45) Veröffentlichungstag und Bekanntmachung des Hinweises auf die Patenterteilung: **30.11.2011**
(21) Anmeldenummer: 03773672.5
(22) Anmeldetag: 28.10.2003
(51) Int. Cl.: C12Q 1/68, G01N 33/53

(54) **VERFAHREN UND VORRICHTUNG ZUM HERSTELLEN EINES BIOLOGISCHEN MICROARRAYS**
METHOD AND DEVICE FOR PRODUCING A BIOLOGICAL MICROARRAY
PROCEDE ET DISPOSITIF POUR PRODUIRE UN JEU ORDONNE DE MICROECHANTILLONS BIOLOGIQUES

(30) Priorität: 29.10.2002 DE 10250495
(43) Veröffentlichungstag der Anmeldung: 22.06.2005
(60) Teilanmeldung: 09004147.6
(73) Patentinhaber: Endress+Hauser Conducta Gesellschaft für Mess- und Regeltechnik mbH+Co. KG, 70839 Gerlingen (DE)
(72) Erfinder: KLAPPROTH, Holger, 79108 Freiburg (DE); LEHMANN, Mirko, 79117 Freiburg (DE); SIEBEN, Ulrich, 79279 Vörstetten (DE)
(74) Vertreter: Koslowski, Christine Adelheid
(86) Internationale Anmeldenummer: PCT/EP2003/011965
(87) Internationale Veröffentlichungsnummer: WO 2004/040303

(56) Entgegenhaltungen:
- US-A- 5 922 550
- US-A- 6 060 256
- US-A1- 2002 147 330
- US-B1- 6 399 295

## Beschreibung

Die Erfindung betrifft ein Verfahren zum Herstellen eines biologischen Microarrays nach dem Oberbegriff von Anspruch 1 und eine Vorrichtung zum Herstellen eines biologischen Mlcroarrays nach dem Oberbegriff von Anspruch 4.

Aus US 2002/0147330 A1 ist ein biologisches Mlcroarray bekannt, das als Träger einen Papierstreifen aufweist, der in Form einer Rolle in einer Kassette angeordnet ist. Auf dem Papierstreifen sind mehrere, In Erstreckungsrichtung des Papierstreifens zueinander versetzte Bereiche mit Rezeptoren immobilisiert die als Oligonukleotide ausgebildet sind. Bei der Herstellung des Microarrays werden die Rezeptoren in wässriger Lösung mit Hilfe eines Tintenstrahldruckers auf den Papierstreifen aufgesprüht und nasschemisch an diesen gebunden. Der Tintenstrahldrucker weist mehrere Austrittsdüsen auf, die jeweils mit einem Reservoir, verbunden sind. Die Reservoirs sind mit Lösungen befüllt, die unterschiedliche Rezeptoren enthalten. Nachdem mit Hilfe des Tintenstrahldruckers ein erster Rezeptorbereich auf dem Papierstreifen immobilisiert wurde, wird der Papierstreifen in Längsrichtung relativ zu dem Tintenstrahldrucker bewegt, um einen zweiten, sich von dem ersten Rezeptorbereich unterscheidenden Rezeptorbereich mit Abstand zu dem ersten Rezeptorbereich auf den Papiersreifen aufzubringen. Danach werden in entsprechender Weise weitere Rezeptorbereiche auf den Träger aufgebracht.

Das Microarray dient zum qualitativen und/oder quantitativen Nachweis des Vorhandenseins von bestimmten Liganden, wie z.B. Biomolekülen, in einer zu analysierenden Probe. Die Rezeptoren der einzelnen Bereiche unterscheiden sich jeweils in ihrer Spezifität gegenüber einem bestimmten, nachzuweisenden Liganden. Dadurch ist es möglich, die Probe mit Hilfe des Microarrays gleichzeitig auf das Vorhandensein mehrerer unterschiedlicher Liganden zu untersuchen.

Zur Detektion eines in der Probe enthaltenen Liganden wird diese mit Hilfe einer aus US 2002/0147330 A1 bekannten Untersuchungsvorrichtung mit den auf dem Microarray immobilisierten Rezeptoren in Kontakt gebracht. Die Untersuchungsvorrichtung weist dazu eine Probenauftragungseinrichtung auf, an der das Microarray zum Auftragen der Probe vorbeibewegt wird. Wenn In der Probe ein Ligand enthalten ist, für den ein auf dem Träger des Microarrays immobilisierter Rezeptor spezifisch ist, bindet der Ligand an den Rezeptor. Der dadurch entstandene Rezeptor-Liganden-Komplex wird mit Hilfe einer Anregungsstrahlung zur Abgabe von Lumineszenzstrahlung angeregt. Zur Detektion der Lumineszenzstrahlung wird das Microarray an einem Strahlungsempfänger vorbeibewegt, der In Bewegungsrichtung des Microarrays hinter der Auftragungseinrichtung angeordnet ist. Die Vorrichtung hat den Nachteil, dass der Strahlungsempfänger relativ weit von den Rezeptoren beabstandet sind. Die Vorrichtung ermöglicht deshalb nur eine geringe Ortsauflösung der Detektion eines auf dem Microarray befindlichen Rezeptor-Liganden-Kom plexes.

Aus US 6 060 256 ist ein Verfahren der eingangs genannten Art bekannt, bei dem ein Träger als transparente Polymerfolie hergestellt wird, der mit einem Metallfilm beschichtet ist. Auf dem Metallfilm werden Rezeptoren aufgedruckt, die für einen bestimmten Liganden bindungsspezifisch sind. Dabei ermöglicht es der Metallfilm, die Rezeptoren ohne die Verwendung von Chemikalien auf dem Träger zu immobilisieren. Die Rezeptoren haften also indirekt über eine Zwischenschicht an der Polymerfolle an.

Es besteht deshalb die Aufgabe, ein Verfahren und eine Vorrichtung anzugeben, mit denen ein Microarray auf einfache Welse herstellbar ist.

Bezüglich des Verfahrens wird die Aufgabe mit den Merkmalen des Anspruchs 1 gelöst.

In vorteilhafter Weise kann das Microarray dann eine Doppelfunktion erfüllen und außer zum Untersuchen einer Probe auch zum Abdichten eines die Probe enthaltenden Probenraumes gegen einen Sensor verwendet werden, der zur Detektion eines auf dem Microarray immobilisierten Llganden-Rezeptorkomplexes vorgesehen ist. Da der Träger transparent ist, kann die Probe durch den Träger hindurch optisch untersucht werden. Durch die Bestrahlung des Trägers mit ultravioletter Strahlung werden die Rezeptoren auf der Polymerfolie immobilisiert Dabei vernetzen die Moleküle der Rezeptoren. Somit kann eine umständliche und aufwändige Wärmebehandlung zur Fixierung der Rezeptoren auf dem Träger entfallen. Die Rezeptoren können Nukleinsäuren oder Derivate davon (DNA, RNA, PNA, LNA, Oligonukleotide, Plasmide, Chromosomen), Peptide, Proteine (Enzym, Protein, Oligopeptide, zelluläre Rezeptorproteine und deren Komplexe, Peptidhormone, Antikörper und deren Fragmente), Kohlenhydrate und deren Derivate, Insbesondere glykosylierte Proteine und Glycoside, Fette, Fettsäuren und/oder Lipide umfassen. Die Polymerfolie kann bei ihrer Herstellung unter Einwirkung von Druck und Wärme aus einer Kunststoffmasse extrudiert werden.

Bei einer bevorzugten Ausführungsform des Verfahrens wird der Träger als flexibles Band gefertigt, auf dem die Rezeptoren in Erstreckungsrichtung des Bands zueinander versetzt immobilisiert werden, wobei das durch das Band mit den darauf befindlichen Rezeptoren gebildete Microarray vorzugsweise als Rolle magaziniert wird. Das mit den Rezeptoren beschichte Band wird also platzsparend magaziniert. Die Magazinierung kann beispielsweise In der Welse erfolgen, dass das Band zur Bildung eines Stapels schlaufen- und/oder zickzackförmig gefaltet bzw. zusammengelegt wird. Bevorzugt wird das Band nach dem Beschichten mit den Rezeptoren mittels einer Wickelvorrichtung zu einer Rolle aufgewickelt. Das Auftragen der Rezeptoren auf das Band kann kontinuierlich oder abschnittweise erfolgen. Beim kontinuierlichen Auftragen wird das Band in Erstreckungsrichtung des Bands kontinuierlich, vorzugsweise mit konstanter Geschwindigkeit, an einer Abgabestelle für die Rezeptoren vorbeibewegt, während gleichzeitig ein bereits mit Rezeptoren beschichteter Abschnitt des Bands magaziniert wird. Beim abschnittweisen Auftragen der Rezeptoren wird jeweils ein Abschnitt des Bands an der Abgabestelle positioniert und mit den Rezeptoren beschichtet. Danach wird das Band um die Länge des beschichteten Randabschnitts in Erstreckungsrichtung des Bands weiter transportiert und magaziniert, um den nächsten Bandabschnitt zum Beschichten mit Rezeptoren an der Abgabestelle zu positionieren. Mit dem Verfahren kann auf kompaktem Raum eine große Trägeroberfläche beschichtet werden. Auch lässt sich das Verfahren gut automatisieren. Die mit dem Verfahren hergestellten Microarrays weisen kompakte Abmessungen auf Sie lassen sich daher gut lagern und handhaben.

Zweckmäßigerweise werden die Rezeptoren auf den Träger aufgedruckt, insbesondere durch Aufsprühen mindestens eines die Rezeptoren enthaltenden Flüssigkeitsstrahls auf den Träger. Das Microarray ist dann noch einfacher herstellbar. Das Aufdrucken der Rezeptoren kann gegebenenfalls mit Hilfe eines Tintenstrahldruckers erfolgten.

Bezüglich der Vorrichtung wird die vorstehend genannte Aufgabe mit den Merkmalen des Anspruchs 4 gelöst.

In vorteilhafter Weise ist es dadurch möglich, die Rezeptoren auf einer feuchtigkeitsdichten Polymerfolie zu Immobilisieren. Die Polymerfolie kann dann eine Doppelfunktion erfüllen und außer zum Untersuchen einer Probe auch zum Abdichten eines die Probe enthaltenden Probenraumes gegen einen Sensor zur Detektion eines auf dem Microarray immobilisierten Liganden-Rezeptorkomplexes verwendet werden. Die Vorrichtung kann kompakt aufgebraut sein und ermöglicht es, den Träger während des Transports von dem ersten zu dem zweiten Magazin mit den Rezeptoren zu beschichten. Mit der Vorrichtung können große Trägermateriallängen und somit entsprechend große Trägeroberflächen auf einfache Weise mit Rezeptoren beschichtet werden. Die Vorrichtung ermöglicht daher eine kostengünstlge Serienfertigung von Microarrays. Die Auftragungseinrichtung kann ortsfest an der Halterung angeordnet sein. Dadurch kann eine aufwändige und teuere Positioniereinrichtung zum Bewegen der Auftragungseinrichtung relativ zu der Halterung eingespart werden. Für den Transport des bandförmigen Trägers von der Rolle zu der Aufwickeleinrichtung kann ein Transportantrieb vorgesehen sein.

Vorteilhaft ist, wenn an der Halterung eine Markiereinrichtung zum Anbringen von maschinenlesbaren Markierungen an dem Träger angeordnet ist, und wenn die Markiereinrichtung vorzugsweise derart ausgebildet ist, dass die Markierungen zumindest Bereiche aufweisen, die In einer vorbestimmten Lage relativ zu den auf das Band aufgebrachten Rezeptoren angeordnet sind. Die Markierungen können dann zum Bestimmen der Lage der Rezeptoren auf dem Träger mit Hilfe eines geeigneten Sensors detektiert werden. Dadurch ist es beispielsweise möglich, die auf dem Träger immobilisierten Rezeptoren in einer Fertigungsstraße für Blochips exakt an einem zur Detektion eines Rezeptor-Liganden-Komplexes vorgesehenen optischen Sensor zu positionieren.

Besonders vorteilhaft ist, wenn die Markiereinrichtung zum Codieren der Markierungen entsprechend der Art wenigstens eines der Markierung jeweils zugeordneten Rezeptors ausgebildet ist. Durch Einlesen des Codes mit Hilfe einer Lesevorrichtung kann dann beispielsweise beim Untersuchen einer Probe mit dem Microarray die Art der auf dem Microarray befindlichen Rezeptoren oder Rezeptorberelche auf einfache Weise bestimmt und gegebenenfalls an eine Auswerteeinrichtung und/oder eine Anzeigeeinrichtung übermittelt werden. Dabei ist es sogar möglich, dass auf dem Träger mehrere unterschiedliche Rezeptoren immobilisiert sind, und dass diese Rezeptoren jeweils mit einer eigenen Codierung versehen sind.

Bei einer bevorzugten Ausführungsform der Erfindung weist die Auftragungseinrichtung wenigstens eine Bedruckungseinrichtung auf, insbesondere einen Strahldrucker. Die Rezeptoren können dadurch auf einfache Weise ortsaufgelöst auf den Träger aufgebracht werden. Dabei ist es sogar möglich, dass der Strahldrucker mehrere vorzugsweise quer zur Längserstreckungsrichtung des bandförmigen Trägers nebeneinander angeordnete Druckköpfe zum Aufbringen unterschiedlicher Arten von Rezeptoren auf den bandförmigen Träger aufweist Die unterschiedlichen Arten von Rezeptorarten können beispielsweise eine abgestufte Affinität zu einem bestimmten Liganden aufweisen und/oder für unterschiedliche Liganden spezifisch sein.

Nachfolgend ist ein Ausführungsbeisplei der Erfindung anhand der Zeichnung näher erläutert. Es zeigen zum Teil stärker schematisiert:
- Fig. 1: eine Seitenansicht einer Vorrichtung zum Immobilisieren von Rezeptoren auf einem bandförmigen Träger, und
- Fig. 2: eine Aufsicht auf einen an einem Halbleiterchip positionierten Abschnitt eines bandförmigen Microarrays.

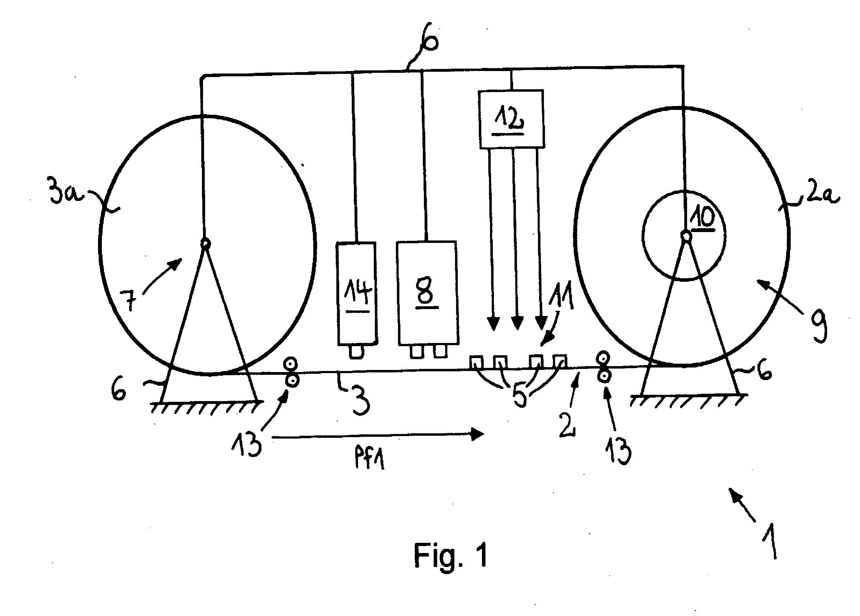

Eine In Fig. 1 im Ganzen mit 1 bezeichnete Vorrichtung zum Herstellen eines biologischen Microarrays 2, bestehend aus einem bandförmigen Träger 3 mit darauf immobilisierten, jeweils für einen bestimmten Liganden spezifischen Rezeptoren 5, weist eine in der Zeichnung nur schematisch dargestellte Halterung 6 auf, an der ein erstes Magazin mit einer Aufnahme 7 für den bandförmigen, zu einer Rolle 3a gewickelten Träger 3 angeordnet ist. An der Aufnahme 7 ist die Rolle 3a um ihre Achse drehbar gelagert. Der Träger 3 ist als feuchtigkeitsdichte, optisch transparente Polymerfolie ausgebildet.

An der Halterung 6 ist ferner eine Auftragungseinrichtung 8 angeordnet, mit deren Hilfe die Rezeptoren 5 auf den Träger 3 aufgetragen werden können. Der bandförmige Träger 3 verläuft von der Rolle 3a zu der Auftragungseinrichtung 8 und von dieser zu einem zweiten Magazin, das eine Aufwickeleinrichtung 9 aufweist. Die Aufwickelelnrichtung 9 hat einen Spulenkörper 10, der um seine Achse drehbar an der Halterung 6 angeordnet ist. Auf dem Spulenkörper 10 ist der mit den Rezeptoren 5 beschichtete Träger 3, der das Microarray 2 bildet, zu einer Rolle 2a aufwickelbar.

Zwischen der Auftragungseinrichtung 8 und der Aufwickeleinrichtung 9 ist eine Bestrahlungsstelle 11 vorgesehen, an der die auf den Träger 3 aufgebrachten Rezeptoren 5 mit Hilfe einer Lichtquelle 12 mit UV-Licht bestrahlt und dadurch auf dem Träger 3 immobilisiert werden können. Zur Führung des Trägers 3 von der Rolle 3a zu der Aufwickeleinrichtung 9 ist eine Bandführungseinrichtung 1 3 vorgesehen, die Führungsrollen aufweist, zwischen denen der bandförmigen Träger hindurchgeführt ist.

Zum Transport des Trägers 3 von der an der Aufnahme 7 angeordneten Rolle 3a in Richtung des Pfeils Pf1 über die Auftragungseinrichtung 8 und die Bestrahlungsstelle 10 zu der Aufwickeleinrichtung 9 ist eine Transporteinrichtung vorgesehen, die in Zeichnung nicht näher dargestellt ist. Die Transporteinrichtung kann einen Servomotor als Antrieb aufweisen, der mit dem Spulenkörper 10 und/oder der Bandführungseinrichtung 13 in Antriebsverbindung steht.

Die Auftragungseinrichtung 8 weist mehrere Vorratsbehälter für unterschiedliche Arten von Rezeptoren 5 auf In den Vorratsbehältern sind die Rezeptoren 5 in flüssiger Form oder einem flüssigen Medium angeordnet. Die Rezeptoren können für unterschiedliche Liganden spezifisch sein und/oder eine unterschiedliche Affinität zu einem bestimmten Liganden aufweisen. Die einzelnen Vorratsbehälter für die Rezeptoren 5 sind jeweils mit einer Abgabeeinrichtung verbunden, die eine Austrittsöffnung für die Rezeptoren 5 aufweist. An den Austrittsöffnungsöffnungen können die Rezeptoren kontinuierlich oder diskontinuierlich abgegeben werden. Es ist aber auch möglich, dass mehrere Vorratsbehälter über Absperrventile mit einer gemeinsamen Austrittsöffnung verbunden sind. Die Austrittsöffnungen sind einer zu beschichtenden Flachseite des Trägers 3 zugewandt. Dabei sind die Austrittsöffnungen etwas von dem Träger 3 beabstandet. Die Abgabe der Rezeptoren 5 an den Austrittsöffnungen erfolgt vorzugsweise unter Druck in Form eines Sprühstrahls.

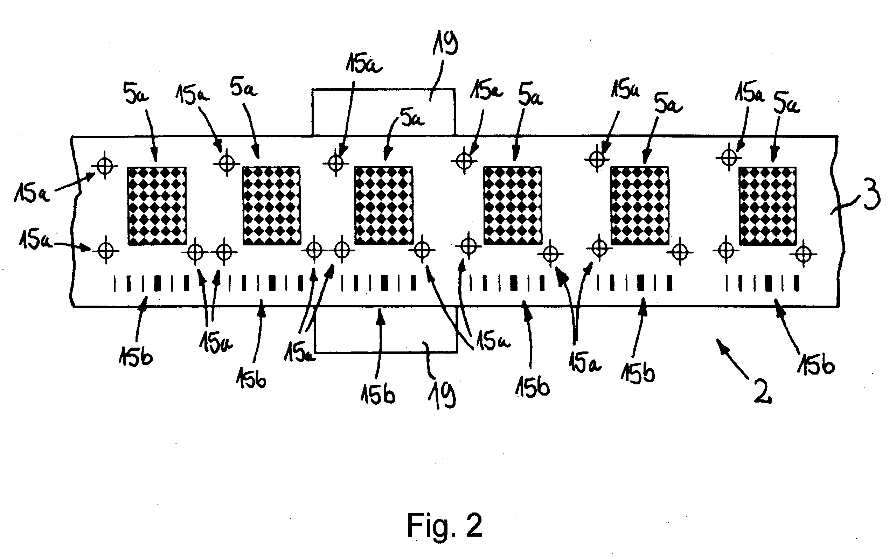

In Fig. 2 ist erkennbar, dass auf den Träger 3 eine Vielzahl von Rezeptorfeldern 5a aufgebracht werden, die in konstanten Abständen in Erstreckungsrichtung des Trägers 3 voneinander beabstandet sind. Die Rezeptorfelder 5a weisen eine etwa rechteckige Außenkontur auf Zwei einander gegenüberliegende Randbereiche der einzelnen Rezeptorfelder 5a verlaufen jeweils etwa parallel zur Löngserstreckung Pt2 des Trägers 3. Jedes Rezeptorfeld 5a weist mehrere Rezeptoren 5 bzw. Rezeptorbereiche auf, die matrixförmig in mehreren Reihen und Spalten angeordnet sind.

An der Halterung 6 ist eine Markiereinrichtung 14 zum Anbringen von maschinenlesbaren Markierungen 15a, 15b an dem Träger 3 angeordnet. Die Markierungen 15a sind als Posifionierhilfen ausgebildet und weisen ein Fadenkreuz auf, mit dessen Hilfe der Träger 3 mit den darauf befindlichen Rezeptorbereichen in einer vorbestimmten Lage beispielsweise an einem optischen Sensor positionierbar ist. Die Markierungen 15a sind als Strichcodes ausgebildet, in dem Informationen über die dazu jeweils benachbarten Rezeptorfelder 5a, insbesondere über die Art der Rezeptoren 5, gespeichert sind.

Es ist aber auch denkbar, dass der Träger 3 bereits fertig vormarkiert ist, die Markierungen also bereits auf den auf der Rolle 3a befindlichen Träger 3 aufgedruckt oder anderweitig angebracht sind. In diesem Fall kann die Vorrichtung 1 anstelle der Markiereinrichtung 14 eine Leseeinrichtung zum Detektieren der Markierungen 15a und/oder 15b aufweisen. Die Leseeinrichtung ist zum Positionieren des Trägers 3 an der Auftragungseinrichtung 8 in einer durch die Markierungen vorbestimmten Lage mit der Transporteinrichtung und/oder zum Auftragen des dem Strichcode entsprechenden Rezeptormaterials mit der Auftragungseinrichtung 8 verbunden. Gegebenenfalls ist es sogar möglich, dass der Träger 3 in mehreren Durchläufen jeweils mit unterschiedlichen Rezeptoren 5 beschichtet wird. Dies kann zum Beispiel in der Welse erfolgen, dass die Vorratsbehälter der Auftragungseinrichtung 8 für einen ersten Durchlauf mit einer Anzahl erster Rezeptoren befüllt werden, dass der Träger 3 danach mit diesen Rezeptoren bereichsweise beschichtet wird, wobei der Träger von der Rolle 3a über die Auftragungseinrichtung 8 zu der Aufwicheleinrichtung 9 transportiert wird, dass der beschichtete Träger 3 danach von der Aufwickeleinrichtung 9 auf die Rolle 3a zurückgespult wird, dass für einen zweiten Durchlauf die Vorratsbehälter der Auftragungseinrichtung 8 mit einer Anzahl zweiter Rezeptoren befüllt werden, und dass der Träger 3 danach mit diesen Rezeptoren 5 bereichsweise beschichtet wird, wobei die Rezeptoren 5 in dem zweiten Durchlauf an Stellen auf den Träger 3 aufgebracht werden, die bei dem ersten Durchlauf nicht mit Rezeptoren 5 beschichtet wurden. Gegebenenfalls können in entsprechender Welse weitere Durchläufe durchgeführt werden.

In Fig. 2 ist das Microarray 2 an einem Mikrochip 19 positioniert, In den Strahlungsempfänger integriert sind.

## Patentansprüche

1. Verfahren zum Herstellen eines biologischen Microarrays (2), wobei ein Träger (3) als transparente und feuchtigkeitsdichte Polymerfolie hergestellt wird, wobei auf den Träger Rezeptoren (5) aufgebracht werden, die jeweils mit einem bestimmten Liganden eine spezifische Bindung eingehen können, und wobei die Rezeptoren (5) auf dem Träger immobilisiert werden, **dadurch gekennzeichnet, dass** die Rezeptoren (5) durch Bestrahlung mit ultravioletter Strahlung direkt auf der Polymerfolie immobilisiert werden.

2. Verfahren nach Anspruch 1, **dadurch gekennzeichnet dass** der Träger (3) als flexibles Band gefertigt wird, auf dem die Rezeptoren (5) in Erstreckungsrichtung des Bands zueinander versetzt immobilisiert werden, und dass das durch das Band mit den darauf befindlichen Rezeptoren (5) gebildete Microarray (2) vorzugsweise als Rolle (2a) magaziniert wird.

3. Verfahren nach Anspruch 1 oder 2, **dadurch gekennzeichnet, dass** die Rezeptoren (5) auf den Träger (3) aufgedruckt werden, insbesondere durch Aufsprühen mindestens eines, die Rezeptoren (5) enthaltenden Flüssigkeitsstrahls auf den Träger.

4. Vorrichtung (1) zum Herstellen eines biologischen Microarrays (2), insbesondere zum Durchrühren des Verfahrens nach einem der Ansprüche 1 bis 3, wobei das Microarray (2) zumindest aus einem flexiblen Träger (3) mit darauf immobilisierten Rezeptoren (5) besteht, die jeweils mit einem bestimmten Liganden eine spezifische Bindung eingehen können, mit einer Halterung (6), an der ein erstes Magazin mit einer Aufnahme (7) für einen zu einer Rolle (3a) gewickelten bandförmigen Träger (3) angeordnet ist, wobei die Aufnahme (7) zum drehbaren Anbringen der Rolle (3a) ausgebildet ist, wobei an der Halterung (6) mindestens eine Auftragungseinrichtung (8) zum Aufbringen der Rezeptoren (5) auf den Träger (3) angeordnet ist, und wobei der Träger (3) mittels einer Bandführungseinrichtung (13) von dem ersten Magazin über die Auftragungseinrichtung (8) zu einem zweiten Magazin führbar ist, **dadurch gekennzeichnet, dass** die Vorrichtung (1) eine Lichtquelle (12) zur Abgabe von ultravioletter Strahlung auf die auf den Träger (3) aufgebrachten Rezeptoren (5) aufweist.

5. Vorrichtung (1) nach Anspruch 4, **dadurch gekennzeichnet, dass** an der Halterung (6) eine Markiereinrichtung (14) zum Anbringen von maschinenlesbaren Markierungen (15a, 15b) an dem Träger (3) angeordnet ist, und dass die Markiereinrichtung (14) vorzugsweise derart ausgebildet ist, dass die Markierungen (15a, 15b) zumindest Bereiche aufweisen, die in einer vorbestimmten Lage relativ zu den auf das Band aufgebrachten Rezeptoren (5) angeordnet sind.

6. Vorrichtung (1) nach Anspruch 4 oder 5, **dadurch gekennzeichnet dass** die Markiereinrichtung (14) zum Codieren der Markierungen (15a, 1 5b) entsprechend der Art wenigstens eines der Markierung (15a, 15b) jeweils zugeordneten Rezeptors ausgebildet ist.

7. Vorrichtung (1) nach einem der Ansprüche 4 bis 6, **dadurch gekennzeichnet, dass** die Auftragungseinrichtung (8) wenigstens eine Bedruckungseinrichtung aufweist.

## Claims

1. A method for producing a biological microarray (2), wherein a support (3) is produced as a transparent and moisture-proof polymer foil, wherein receptors (5) are applied to the support and can each form a specific bond to a specific ligand, and wherein the receptors (5) are immobilized on the support, **characterized in that** the receptors (5) are immobilized directly on the polymer foil by irradiation with ultra-violet radiation.

2. The method according to claim 1, **characterized in that** the support (3) is produced as a flexible belt on which the receptors (5) are immobilized in an offset pattern in the direction of elongation of the belt, and **in that** the microarray (2) formed by the belt with the receptors (5) located thereon is preferably stored as a roll (2a).

3. The method according to either claim 1 or claim 2, **characterized in that** the receptors (5) are printed onto the support (3), in particular by spraying at least one liquid jet containing the receptors (5) onto the support.

4. A device (1) for producing a biological microarray (2), in particular for carrying out the method according to any one of claims 1 to 3, wherein the microarray (2) consists at least of a flexible support (3) with receptors (5) immobilized thereon which can each form a specific bond with a specific ligand, with a mount (6) on which a first reservoir comprising a holder (7) for a belt-shaped support (3) wound into a roll (3a) is arranged, wherein the holder (7) is designed for rotatable mounting of the roll (3a), wherein at least one application device (8) for applying the receptors (5) to the support (3) is arranged on the mount (6), and wherein the support (3) can be routed by means of a belt routing mechanism (13) from the first reservoir, past the application device (8) to a second reservoir, **characterized in that** the device (1) comprises a light source (12) for emitting ultra-violet radiation onto the receptors (5) attached to the support (3).

5. The device (1) according to claim 4, **characterized in that** a marker (14) for applying machine-readable marks (15a, 15b) to the support (3) is arranged on the mount (6), and **in that** the marker (14) is preferably designed in such a way that the marks (15a, 15b) at least have areas that are arranged at a predefined position relative to the receptors (5) applied to the belt.

6. The device (1) according to either claim 4 or claim 5, **characterized in that** the marker (14) is designed to code the marks (15a, 15b) in accordance with the type of at least one receptor specifically assigned to the mark (15a, 15b).

7. The device (1) according to any one of claims 4 to 6, **characterized in that** the application mechanism (8) comprises at least one printing mechanism.

## Revendications

1. Procédé destiné à la fabrication d'un microréseau biologique (2), pour lequel un support (3) est fabriqué sous la forme d'un film polymère transparent et étanché à l'humidité, pour lequel sont appliqués sur le support des récepteurs (5), qui peuvent former une liaison spécifique avec un ligand déterminé, et pour lequel les récepteurs (5) sont immobilisés sur le support, **caractérisé en ce que** les récepteurs (5) sont immobilisés directement sur le film polymère au moyen d'une irradiation avec un rayonnement ultraviolet.

2. Procédé selon la revendication 1, **caractérisé en ce que** le support (3) est fabriqué sous la forme d'une bande flexible, sur laquelle les récepteurs (5) sont immobilisés de façon décalée les uns par rapport aux autres, dans le sens d'allongement de la bande.

3. Procédé selon la revendication 1 ou 2, **caractérisé en ce que** les récepteurs (5) sont imprimés sur le support (3), notamment par l'application par pulvérisation sur le support d'au moins un jet liquide contenant les récepteurs (5).

4. Dispositif (1) destiné à la fabrication d'un microréseau biologique (2), notamment pour la réalisation du procédé selon l'une des revendications 1 à 3, pour lequel le microréseau (2) est constitué d'au moins un support flexible (3) avec les récepteurs (5) immobilisés sur celui-ci, récepteurs pouvant former une liaison spécifique avec un ligand déterminé, avec une fixation (6), sur laquelle est disposée un premier magasin pourvu d'un logement (7) pour un support (3) en forme de bande enroulée sous la forme d'un rouleau (3a), le logement (7) étant constitué pour une mise en place orientable du rouleau (3a), au moins un dispositif d'application (8) destiné à l'application des récepteurs (5) sur le support (3) étant disposé sur la fixation (6), et le support (3) pouvant être guidé au moyen d'un dispositif de guidage de bande (13) depuis le premier magasin en passant par le dispositif d'application (8) vers un deuxième magasin, **caractérisé en ce que** le dispositif (1) comporte une source lumineuse (12) destinée à l'émission d'un rayonnement ultraviolet sur les récepteurs (5) appliqués sur le support (3).

5. Dispositif (1) selon la revendication 4, **caractérisé en ce qu'**est disposée, sur la fixation (6), un dispositif de marquage (14) destiné à l'application sur le support (3) de marquages (15a, 15b) compréhensibles par une machine, et **en ce que** le dispositif de marquage (14) est constitué de préférence de telle manière à ce que les marquages (15a, 15b) présentent au minimum des zones, qui sont disposées dans une position prédéterminée par rapport aux récepteurs (5) appliqués sur la bande.

6. Dispositif (1) selon la revendication 4 ou 5, **caractérisé en ce que** le dispositif de marquage (14) destiné au codage des marquages (15a, 15b) est constitué, selon le type, d'au moins un récepteur respectivement attribué au marquage (15a, 15b)

7. Dispositif (1) selon l'une des revendications 4 à 6, **caractérisé en ce que** le dispositif d'application (8) comporte au moins un dispositif d'impression.
